# EUROPEAN PATENT APPLICATION

(11) **EP 4 470 851 A1**
(43) Date of publication of application: **04.12.2024**
(21) Application number: 23216105.9
(22) Date of filing: 13.12.2023
(51) Int. Cl.: B60T 7/04, B60T 13/74, B60T 17/22

(54) **BRAKE APPARATUS AND METHOD OF CONTROLLING THE SAME**

(30) Priority: 02.06.2023 KR 20230071390
(71) Applicant: HL Mando Corporation, Pyeongtaek-si, Gyeonggi-do 17962 (KR)
(72) Inventor: SEO, Junghwan, 07524 Seoul (KR)
(74) Representative: BCKIP Part mbB

(57) **Abstract**

A brake apparatus includes a first motor associated with a first brake for braking a first wheel, a first drive controlling a driving current of the first motor to brake the first wheel, a second motor associated with a second brake for braking a second wheel, a second drive controlling a driving current of the second motor to brake the second wheel, a first processor integrated with the first drive and receiving an output of a first pedal sensor detecting movement of a brake pedal, and a second processor integrated with the second drive and receiving an output of a second pedal sensor detecting the movement of the brake pedal. The first processor transmits a brake signal to the first drive based on the output of the first pedal sensor. The second processor transmits a brake signal to the second drive based on the output of the second pedal sensor.

## Description

### BACKGROUND

### 1. Technical Field

Embodiments of the present disclosure generally relate to an electro-mechanical brake apparatus and a method of controlling the same.

### 2. Description of the Related Art

Brake apparatuses are necessarily mounted in vehicles to perform braking, and various types of brake apparatuses have been developed for driver and passenger safety.

A hydraulic brake apparatus may include a wheel cylinder provided on each wheel of a vehicle. The hydraulic brake apparatus generates a hydraulic pressure in response to driving power requested by a driver and provides the generated hydraulic pressure to the wheel cylinder. A braking torque may be provided to the wheel cylinder by the hydraulic pressure provided to the wheel cylinder.

An electro-mechanical brake apparatus may include a braking motor provided on each wheel of a vehicle. The electro-mechanical brake apparatus transmits an electrical signal to the braking motor in response to braking power requested by a driver. The motor may mechanically provide a braking torque to the wheel of the vehicle according to the received electrical signal.

Unlike the hydraulic brake apparatus, the electro-mechanical brake apparatus which provides the braking torque to the wheel is not hydraulically or mechanically connected to a control unit which controls the electro-mechanical brake apparatus. Accordingly, the electro-mechanical brake apparatus may be more sensitive to damage or an error (for example, voltage drop of a battery and short circuit due to overheating) in an electrical system of the vehicle.

### SUMMARY

It is one aspect of the present disclosure to provide an electro-mechanical brake apparatus and a method of controlling the same which may be resistant to damage or an error in an electrical system of a vehicle.

It is another aspect of the present disclosure to provide an electro-mechanical brake apparatus and a method of controlling the same in which redundancy is provided for electrical devices such as a power circuit, a sensor, and a processor.

It is still another aspect of the present disclosure to provide an electro-mechanical brake apparatus and a method of controlling the same in which auxiliary processors provided on wheels in preparation for a failure (such as damage, an error, malfunction, or abnormality) of a main processor independently control motors provided on the wheels.

In accordance with one aspect of the present disclosure, a brake apparatus includes a first motor associated with a first brake configured to brake a first wheel of a vehicle, a first drive configured to control a driving current of the first motor to brake the first wheel, a second motor associated with a second brake configured to brake a second wheel of the vehicle, a second drive configured to control a driving current of the second motor to brake the second wheel, a first processor integrally provided with the first drive and configured to receive an output of a first pedal sensor configured to detect movement of a brake pedal of the vehicle, and a second processor integrally provided with the second drive and configured to receive an output of a second pedal sensor configured to detect the movement of the brake pedal. The first processor transmits a brake signal to the first drive on the basis of the output of the first pedal sensor of the vehicle. The second processor transmits a brake signal to the second drive on the basis of the output of the second pedal sensor of the vehicle.

The first processor may provide information about an operation state of the first processor to the second processor, the first drive, and the second drive. The second processor may provide information about an operation state of the second processor to the first processor, the first drive, and the second drive.

The first processor may transmit a brake signal to the second drive through a first network connecting the second drive and the first processor based on a fail state of the second processor. The second processor may transmit a brake signal to the first drive through a second network connecting the first drive and the second processor based on a fail state of the first processor

The first drive may receive the output of the first pedal sensor and control the driving current of the first motor to brake the first wheel on the basis of the output of the first pedal sensor during fail states of the first and second processors. The second drive may receive the output of the second pedal sensor and control the driving current of the second motor to brake the second wheel on the basis of the output of the second pedal sensor during the fail states of the first and second processors.

The first processor may receive an output of a first wheel speed sensor configured to measure a rotational speed of the first wheel and an output of a second wheel speed sensor configured to measure a rotational speed of the second wheel. the second processor may receive an output of a third wheel speed sensor configured to measure the rotational speed of the first wheel and an output of a fourth wheel speed sensor configured to measure the rotational speed of the second wheel.

The first processor may transmit a brake signal to the first drive to intermittently brake the first wheel on the basis of the output of the first wheel speed sensor. The second processor may transmit a brake signal to the second drive to intermittently brake the second wheel on the basis of the output of the third wheel speed sensor.

The first processor may transmit a brake signal to the first and second drives to intermittently brake the first and second wheels on the basis of the outputs of the first and second wheel speed sensors during a fail state of the second processor. The second processor may transmit a brake signal to the first and second drives to intermittently brake the first and second wheels on the basis of the outputs of the third and fourth wheel speed sensors during a fail state of the first processor.

The first drive may receive the output of the first wheel speed sensor and the output of the second wheel speed sensor. The second drive may receive the output of the third wheel speed sensor and the output of the fourth wheel speed sensor.

The first drive may control the driving current of the first motor to intermittently brake the first wheel on the basis of the output of the first wheel speed sensor during fail states of the first and second processors. The second drive may control the driving current of the second motor to intermittently brake the second wheel on the basis of the output of the third wheel speed sensor during fail states of the first and second processors.

The first processor and the first drive may receive power from a first power source of the vehicle. The second processor and the second drive may receive power from a second power source of the vehicle.

In accordance with one aspect of the present disclosure, a method of controlling a brake apparatus, which includes a first motor associated with a first brake configured to brake a first wheel of a vehicle and a second motor associated with a second brake configured to brake a second wheel of the vehicle, includes receiving, by a first processor, an output of a first pedal sensor configured to detect movement of a brake pedal of the vehicle, receiving, by a second processor different from the first processor, an output of a second pedal sensor configured to detect the movement of the brake pedal, transmitting, by the first processor, a brake signal to a first drive on the basis of the output of the pedal sensor of the vehicle, transmitting, by the second processor, a brake signal to a second drive on the basis of the output of the second pedal sensor of the vehicle, controlling, by the first drive integrally provided with the first processor, a driving current of the first motor to brake the first wheel, and controlling, by the second drive integrally provided with the second processor, a driving current of the second motor to brake the second wheel.

The method may further comprises providing, by the first processor, information about an operation state of the first processor to the second processor, the first drive, and the second drive, and providing, by the second processor, information about an operation state of the second processor to the first processor, the first drive, and the second drive.

The method may further comprises transmitting, by the first processor, a brake signal to the second drive through a first network connecting the second drive and the first processor during a fail state of the second processor, and transmitting, by the second processor, a brake signal to the first drive through a second network connecting the first drive and the second processor during a fail state of the first processor.

The method may further comprises receiving, by the first drive, the output of the first pedal sensor, controlling, by the first drive, the driving current of the first motor to brake the first wheel on the basis of the output of the first pedal sensor during fail states of the first and second processors, receiving, by the second drive, the output of the second pedal sensor, and controlling, by the second drive, the driving current of the second motor to brake the second wheel on the basis of the output of the second pedal sensor during the fail states of the first and second processors.

The method may further comprises receiving, by the first processor, an output of the first wheel speed sensor configured to measure a rotational speed of the first wheel and an output of the second wheel speed sensor configured to measure a rotational speed of the second wheel, and receiving, by the second processor, an output of the third wheel speed sensor configured to measure the rotational speed of the first wheel and an output of the fourth wheel speed sensor configured to measure the rotational speed of the second wheel.

The method may further comprises transmitting, by the first processor, a brake signal to the first drive to intermittently brake the first wheel on the basis of the output of the first wheel speed sensor, and transmitting, by the second processor, a brake signal to the second drive to intermittently brake the second wheel on the basis of the output of the third wheel speed sensor.

The method may further comprises transmitting, by the first processor, a brake signal to the first and second drives to intermittently brake the first and second wheels on the basis of the outputs of the first and second wheel speed sensors during a fail state of the second processor, and transmitting, by the second processor, a brake signal to the first and second drives to intermittently brake the first and second wheels on the basis of the outputs of the third and fourth wheel speed sensors during a fail state of the first processor.

The method may further comprises receiving, by the first drive, the output of the first wheel speed sensor and the output of the second wheel speed sensor, and receiving, by the second drive, the output of the third wheel speed sensor and the output of the fourth wheel speed sensor.

The method may further comprises controlling, by the first drive, the driving current of the first motor to intermittently brake the first wheel on the basis of the output of the first wheel speed sensor during fail states of the first and second processors, and controlling, by the second drive, the driving current of the second motor to intermittently brake the second wheel on the basis of the output of the third wheel speed sensor during the fail states of the first and second processors.

The method may further comprises providing power of a first power source of the vehicle to the first processor and the first drive, and providing power of a second power source of the vehicle to the second processor and the second drive.

### BRIEF DESCRIPTION OF THE DRAWINGS

These and/or other aspects of the disclosure will become apparent and more readily appreciated from the following description of the embodiments, taken in conjunction with the accompanying drawings of which:
FIG. 1 is a block diagram for illustrating a vehicle according to one embodiment of the present disclosure;
FIG. 2 is a cross-sectional view for illustrating an electro-mechanical brake included in a vehicle according to an embodiment of the present disclosure;
FIG. 3 is a schematic diagram for illustrating connection relationships between components included in a brake apparatus according to an embodiment of the present disclosure;
FIG. 4 is a schematic diagram for illustrating power supply between components included in a brake apparatus according to an embodiment of the present disclosure;
FIG. 5 is a conceptual diagram for illustrating communication connection relationships between components included in a brake apparatus according to an embodiment of the present disclosure; and
FIG. 6 is a conceptual diagram for illustrating communication connection relationships between components included in a brake apparatus according to another embodiment of the present disclosure.

### DETAILED DESCRIPTION

The following detailed description is provided to assist the reader in gaining a comprehensive understanding of the methods, apparatuses, and/or systems described herein. Accordingly, various changes, modifications, and equivalents of the methods, apparatuses, and/or systems described herein will be suggested to those of ordinary skill in the art. The progression of processing operations described is an example; however, the sequence of and/or operations is not limited to that set forth herein and may be changed as is known in the art, with the exception of operations necessarily occurring in a particular order. In addition, respective descriptions of well-known functions and constructions may be omitted for increased clarity and conciseness.

Additionally, exemplary embodiments will now be described more fully hereinafter with reference to the accompanying drawings. The exemplary embodiments may, however, be embodied in many different forms and should not be construed as being limited to the embodiments set forth herein. These embodiments are provided so that this disclosure will be thorough and complete and will fully convey the exemplary embodiments to those of ordinary skill in the art. Like numerals denote like elements throughout.

It will be understood that, although the terms first, second, etc. may be used herein to describe various elements, these elements should not be limited by these terms. These terms are only used to distinguish one element from another. As used herein, the term "and/or," includes any and all combinations of one or more of the associated listed items.

It will be understood that when an element is referred to as being "connected," or "coupled," to another element, it can be directly connected or coupled to the other element or intervening elements may be present. In contrast, when an element is referred to as being "directly connected," or "directly coupled," to another element, there are no intervening elements present.

The terminology used herein is for the purpose of describing particular embodiments only and is not intended to be limiting. As used herein, the singular forms "a," "an," and "the," are intended to include the plural forms as well, unless the context clearly indicates otherwise.

The expression, "at least one of a, b, and c," should be understood as including only a, only b, only c, both a and b, both a and c, both b and c, or all of a, b, and c.

Reference will now be made in detail to the exemplary embodiments of the present disclosure, examples of which are illustrated in the accompanying drawings, wherein like reference numerals refer to like elements throughout.

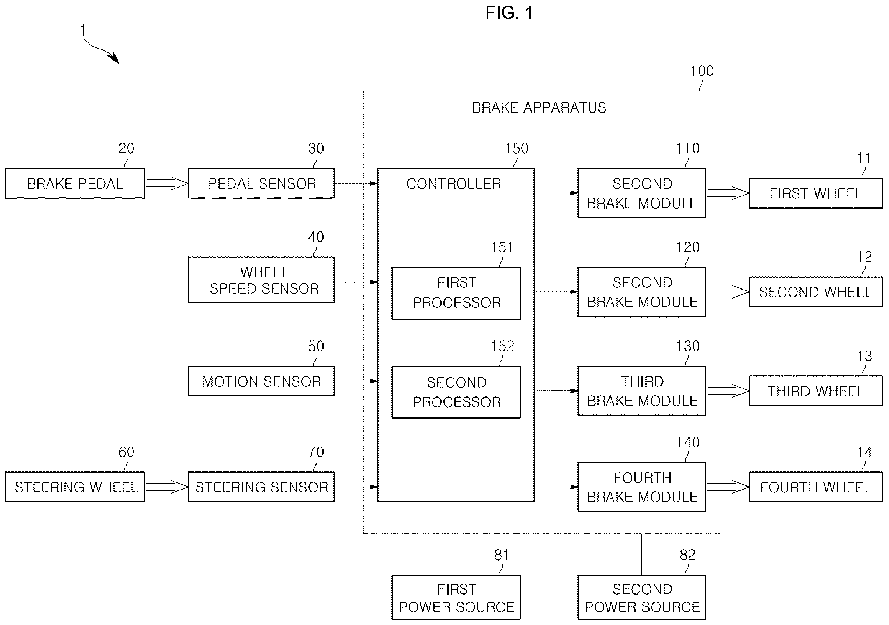

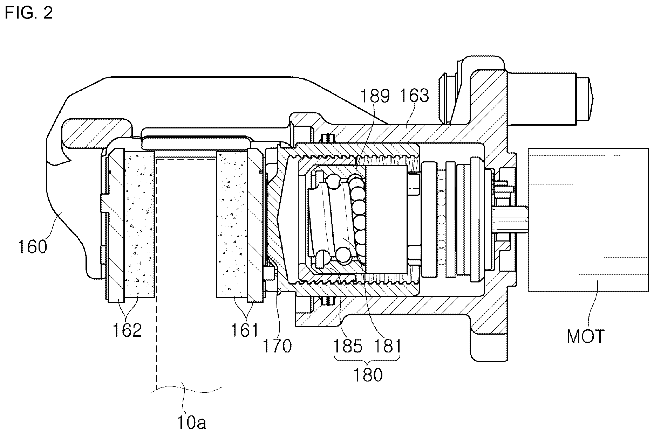

FIG. 1 is a block diagram for illustrating a vehicle according to one embodiment of the present disclosure, and FIG. 2 is a cross-sectional view for illustrating an electro-mechanical brake included in the vehicle according to one embodiment of the present disclosure.

A vehicle 1 may include a body which forms an exterior of the vehicle 1 and accommodates a driver and/or luggage, a chassis including components of the vehicle 1 other than the body, and a plurality of wheels 11, 12, 13, and 14 which rotate so that the vehicle 1 may move.

For example, the vehicle 1 may include the first wheel 11 provided on a front left side of the vehicle 1, the second wheel 12 provided on a front right side of the vehicle 1, the third wheel 13 provided on a rear left side of the vehicle 1, and/or the fourth wheel 14 provided on a rear right side of the vehicle 1. However, the number of wheels included in the vehicle 1 is not limited to four.

As illustrated in FIG. 1, the vehicle 1 may include a brake pedal 20 configured to receive a braking input from the driver, one or more pedal sensors 30 configured to detect displacement or movement of the brake pedal 20, wheel speed sensors 40 configured to detect rotational speeds of the wheels 11, 12, 13, and 14, a steering wheel 60 configured to receive a steering input from the driver, a steering sensor 70 configured to detect rotation of the steering wheel 60, a brake apparatus 100 configured to provide braking power or force to the wheels 11, 12, 13, and 14 to slow down or stop the vehicle 1, and a first power source 81 and a second power source 82 configured to supply power to the brake apparatus 100 and the like.

For example, the brake pedal 20 may be provided in a lower portion of a cabin of the vehicle 1 so that the driver may control the brake pedal 29 with the driver's foot. With an intention of braking, the driver may press the brake pedal 20 to brake the vehicle 1. The brake pedal 20 may move away from a reference position according to the braking intention of the driver.

The pedal sensor 30 is installed close to the brake pedal 20 or is disposed adjacent to any part movable together with the brake pedal 20 and may measure displacement or movement of the brake pedal 20 according to the braking intention of the driver. For example, the pedal sensor 30 may detect a movement or displacement distance from and/or a moving speed at the reference position the brake pedal 20.

The pedal sensor 30 may be electrically or communicationally connected to the brake apparatus 100 and may provide an electrical signal to the brake apparatus 100. For example, the pedal sensor 30 may be directly connected to the brake apparatus 100 through a hard wire or connected to the brake apparatus 100 through a communication network. The pedal sensor 30 may provide an electrical signal corresponding to a movement distance and/or movement speed of the brake pedal 20 to the brake apparatus 100. In addition, the pedal sensor 30 may be integrally provided with the brake apparatus 100.

The pedal sensor(s) 30 may be implemented as a plurality of pedal sensors in preparation for damage or an error in an electrical system. For example, the pedal sensor 30 may include a first sensor and a second sensor. Each of the first sensor and second sensor may provide an electrical signal corresponding to a movement distance and/or movement speed of the brake pedal 20 to the brake apparatus 100.

The wheel speed sensors 40 may include a plurality of wheel speed sensors each installed on the wheels 11, 12, 13, and 14. Each of the plurality of wheel speed sensors may independently detect a rotational speed of one of the wheels 11, 12, 13, and 14.

Each of the wheel speed sensors 40 may be electrically connected to the brake apparatus 100 and may provide an electrical signal to the brake apparatus 100. For example, each of the plurality of wheel speed sensors 40 may be directly connected to the brake apparatus 100 through a hard wire or connected to the brake apparatus 100 through a communication network. Each of the plurality of wheel speed sensors 40 may provide an electrical signal corresponding to the rotational speed of a respective one of the wheels 11, 12, 13, and 14 to the brake apparatus 100.

Each of the plurality of wheel speed sensors 40 installed on a respective one of the wheels 11, 12, 13, and 14 may include a plurality of sensors in preparation for damage or an error in the electrical system. For example, each of the plurality of wheel speed sensors installed on each wheel 11, 12, 13, and 14 may include a first sensor and a second sensor. Each of the first sensor and the second sensor may provide an electrical signal corresponding to a rotational speed of a respective one of the wheels 11, 12, 13, and 14 to the brake apparatus 100.

A motion sensor 50 may be installed at a center of the vehicle 1 or at a point adjacent to the center of the vehicle 1, and may include an acceleration sensor and a gyro sensor configured to detect linear movement and turning movement of the vehicle 1. The acceleration sensor may detect the linear movement of the vehicle 1 and the motion sensor 50. For example, the acceleration sensor may measure an acceleration, a speed, a movement displacement, and a movement direction of the vehicle 1 while the vehicle 1 moves linearly. The gyro sensor may detect the turning movement of the vehicle 1 and the motion sensor 50. For example, the gyro sensor may measure an angular acceleration, an angular speed, and/or a turning displacement of the vehicle 1 while the vehicle 1 turns.

The motion sensor 50 may detect a yaw rate indicating turning of the vehicle 1 around an axis perpendicular to the ground on which the vehicle 1 is traveling.

The motion sensor 50 may be electrically or communicationally connected to the brake apparatus 100 and may provide an electrical signal indicating the linear movement and the turning movement of the vehicle 1 to the brake apparatus 100. The motion sensor 50 may be directly connected to the brake apparatus 100 through a hard wire or connected to the brake apparatus 100 through a communication network. The motion sensor 50 may provide an electrical signal corresponding to the yaw rate of the vehicle 1 to the brake apparatus 100.

For example, the steering wheel 60 may be provided in front of a driver seat so that the driver may control the steering wheel 60 with the driver's hands. The driver may rotate the steering wheel 60 as a steering intention to steer the vehicle 1. The steering wheel 60 may rotate clockwise or counterclockwise according to the steering intention of the driver.

The steering sensor 70 may be installed adjacent or close to a steering column connected to the steering wheel 60 and may measure rotation of the steering wheel 60 according to the steering intention of the driver. For example, the steering sensor 70 may detect a rotary angle at which the steering wheel 60 rotates from a reference rotation position.

The steering sensor 70 may be electrically or communicationally connected to the brake apparatus 100 and may provide an electrical signal to the brake apparatus 100. For example, the steering sensor 70 may be directly connected to the brake apparatus 100 through a hard wire or connected to the brake apparatus 100 through a communication network. In addition, the steering sensor 70 may provide an electrical signal corresponding to a rotation angle and/or torque of the steering wheel 60 to the brake apparatus 100.

The brake apparatus 100 may include electro-mechanical brake modules 110, 120, 130, and 140 (hereinafter, referred to as "brake module") installed on the wheels 11, 12, 13, and 14, respectively, and a controller 150 configured to control the brake modules 110, 120, 130, and 140.

The brake modules 110, 120, 130, and 140 may be configured to brake the wheels 11, 12, 13, and 14, respectively, and brake the vehicle 1. For example, the first brake module 110 is configured to brake the first wheel 11, the second brake module 120 is configured to brake the second wheel 12, the third brake module 130 is configured to brake the third wheel 13, and the fourth brake module 140 is configured to brake the fourth wheel 14. However, the number of brake modules is not limited to four.

Each of the brake modules 110, 120, 130, and 140 may be operated only on the basis of a brake signal output from the controller 150 without being mechanically or hydraulically connected to the brake pedal 20.

For example, as illustrated in FIG. 2, each of the brake modules 110, 120, 130, and 140 may include a caliper brake.

The caliper brake may include a pair of pad plates 161 and 162 installed to press a brake disc 10a which rotates with each of the wheels 11, 12, 13, and 14, a caliper housing 160 which operates the pair of pad plates 161 and 162, a piston 170 installed in the caliper housing 160 to move forward and backward, a power conversion unit 180 configured to receive rotational driving power, convert the rotational driving power to a linear driving power, and transfer the linear driving power to the piston 170 to move the piston 170, and a brake motor MOT configured to generate the rotational driving power to move the piston 170.

The piston 170 may be formed in a cylindrical shape, such as a cup shape, having an open rear side (e.g. a right side of FIG. 2) and is slidably inserted into a cylinder part 163. In addition, the piston 170 may receive power through the power conversion unit 180 and press an inner pad plate 161 toward the brake disc 10a.

The power conversion unit 180 may include a spindle or screw 181 configured to receive the rotary driving power from the brake motor MOT to rotate, a nut 185 which is disposed in the piston 170, screw-connected to the spindle 181, and is movable forward with the piston 170 in response to the rotation of the spindle 181 in a first direction or movable backward with the piston 170 in response to rotation of the spindle 181 in a second direction, and a plurality of balls 189 interposed between the spindle or screw 181 and the nut 185. The power conversion unit 180 may be provided as a ball-screw type converter which converts a rotational motion of the spindle 181 into a linear motion of the nut 185.

A rotational motion of the brake motor MOT may be converted into a linear motion of the piston 170 by the power conversion unit 180. The pair of pad plates 161 and 162 are pressed against the brake disc 10a by the linear motion of the piston 170, and the wheels 11, 12, 13, and 14 may be braked by friction between the pair of pad plates 161 and 162 and the brake disc 10a.

In FIG. 2, one example of the caliper brake of the electro-mechanical brake is illustrated, but the electro-mechanical brake is not limited to the caliper brake. For example, the electro-mechanical brake may be a drum brake.

As described above, each of the brake modules 110, 120, 130, and 140 may include the brake motor MOT and a driving circuit configured to drive the brake motor MOT.

The brake modules 110, 120, 130, and 140 may brake the wheels 11, 12, 13, and 14, respectively, by only an operation of the brake motor MOT without being mechanically or hydraulically connected to the brake pedal 20. Accordingly, a mechanical mechanism or hydraulic circuit extending from the brake pedal 20 to each of the brake modules 110, 120, 130, and 140 may not be needed in the electro-mechanical brake 100.

The controller 150 may receive output signals of the pedal sensor 30, the wheel speed sensor 40, the motion sensor 50, and/or the steering sensor 70 and control operations of the brake modules 110, 120, 130, and 140.

The controller 150 may provide brake signals to the brake modules 110, 120, 130, and 140 to brake the vehicle 1 on the basis of an electrical signal output from the pedal sensor 30. For example, the controller 150 may determine braking power (or a braking acceleration) for braking the vehicle 1 on the basis of the output signal of the pedal sensor 30 and provide the brake signals corresponding to the determined braking power (or braking acceleration) to the brake modules 110, 120, 130, and 140.

The controller 150 may distribute braking power to the brake modules 110, 120, 130, and 140 to brake the vehicle 1 on the basis of the electrical signal output from the pedal sensor 30. For example, the controller 150 may distribute driving power required or requested by the driver to the brake modules 110, 120, 130, and 140 and may provide brake signals corresponding to the braking power distributed to the brake modules 110, 120, 130, and 140. As described above, the brake apparatus 100 may have an electronic brake force distribution (EBD).

The controller 150 may provide brake signals to the brake modules 110, 120, 130, and 140 to temporarily allow rotation of the wheels 11, 12, 13, and 14 on the basis of electrical signals output from the wheel speed sensor 40. For example, the controller 150 may recognize slip of the wheels 11, 12, 13, and 14 on the basis of an output signal of the wheel speed sensor 40 while braking the vehicle 1. Then, the controller 150 may provide brake signals which temporarily allow rotation of the wheels 11, 12, 13, and 14 to the brake modules 110, 120, 130, and 140 in order to eliminate the slip of the wheels 11, 12, 13, and 14 in response to the sensed slip of the wheels 11, 12, 13, and 14. For performing operations or function described above, the brake apparatus 100 may have an anti-lock braking system (ABS).

The controller 150 may provide brake signals to the brake modules 110, 120, 130, and 140 to temporarily brake the wheels 11, 12, 13, and 14 on the basis of an electrical signal output from the wheel speed sensor 40 without, or regardless of, the braking intention of the driver. For example, the controller 150 may recognize spin of the wheels 11, 12, 13, and 14 on the basis of an output signal of the wheel speed sensor 40 while the vehicle 1 travels. The controller 150 may provide brake signals which temporarily brake the wheels 11, 12, 13, and 14 to the brake modules 110, 120, 130, and 140 to eliminate the spin of the wheels 11, 12, 13, and 14 in response to the sensed spin of the wheels 11, 12, 13, and 14. For performing operations or function described above, the brake apparatus 100 may have a braking control system (TCS).

The controller 150 may provide brake signals to the brake modules 110, 120, 130, and 140 to temporarily brake the wheels 11, 12, 13, and 14 on the basis of an electrical signal output from the motion sensor 50 and/or the steering sensor 70 without, or regardless of, the braking intention of the driver. For example, the controller 150 may determine a reference path (e.g. a reference turning path) of the vehicle 1 on the basis of an output signal of the steering sensor 70 while the vehicle 1 steers and may determine a traveling path (e.g. a turning path) of the vehicle 1 on the basis of an output signal of the sensor 50 while the vehicle 1 steers. The controller 150 may detect or recognize oversteering or understeering of the vehicle 1 on the basis of the reference path and the traveling path. The controller 150 may provide brake signals to the brake modules 110, 120, 130, and 140 which temporarily brake the wheels 11, 12, 13, and 14 on the basis of the oversteering and/or understeering. For performing operations or function described above, the brake apparatus 100 may have an electronic stability control (ESC).

The controller 150 may provide parking signals to the brake modules 110, 120, 130, and 140 to prevent rotation of the wheels 11, 12, 13, and 14 in response to a parking command of the driver. For performing operations or function described above, the brake apparatus 100 may have an electronic parking brake (EPB).

The controller 150 may include one or more processors (such as first and second processors 151 and 152) configured to process output signals of the pedal sensor 30, the wheel speed sensor 40, the motion sensor 50, and/or the steering sensor 70 and output electrical signals corresponding to a service brake, the EBD, the ABS, the TCS, the ESC, the EPB, and the like to the brake modules 110, 120, 130, and 140.

The controller 150 may include the plurality of processors in preparation for damage or an error in the electrical system. For example, the controller 150 may include a first processor 151 as a main processor and a second processor 152 as a redundant or spare processor.

The first processor 151 may process output signals of the pedal sensor 30, the wheel speed sensor 40, the motion sensor 50, and/or the steering sensor 70, determine braking power (or a braking acceleration or fastening force) corresponding to the service brake, the EBD, the ABS, the TCS, the ESC, the EPB, and the like on the basis of the processed output signals, and output brake signals corresponding to the braking power to all or some of the brake modules 110, 120, 130, and 140. The brake modules 110, 120, 130, and 140 which have received the brake signals may brake the wheels 11, 12, 13, and 14 according to the braking power corresponding to the brake signals.

The first processor 151 may communicate with the second processor 152. For example, the first processor 151 may periodically transmit an electrical signal to the second processor 152. The second processor 152 may check an operation state (for example, a normal state or a failure state) of the first processor 151 on the basis of whether receiving a periodic state signal from the first processor 151. In addition, the first processor 151 may periodically receive an electrical signal from the second processor 152. The first processor 151 may determine a state of the second processor 152 as a normal state on the basis of receiving of a periodic state signal from the second processor 152, and may recognize a failure state (for example, damage, an error, reset, power off, or an abnormal state) of the second processor 152 when not receiving the periodic state signal from the second processor 152.

The first processor 151 may be integrally provided with or installed in any one of the brake modules 110, 120, 130, and 140. For example, the first processor 151 may be provided in a housing forming any one brake module, or physically and mechanically attached to a housing forming any one brake module. The first processor 151 may be physically or mechanically integrated with one of the brake modules 110, 120, 130, and 140 as a single piece structure.

The first processor 151 may control all the brake modules 110, 120, 130, and 140 or only some of the brake modules 110, 120, 130, and 140. For example, the first processor 151 integrally provided with the first brake module 110 may control all the brake modules 110, 120, 130, and 140 during a normal operation. As another example, the first processor 151 integrally provided with the first brake module 110 may control the first brake module 110 and the fourth brake module 140 normally (e.g. when the second processor 152 is in a normal state), and, when the second processor 152 fails, the first processor 151 may control all the brake modules 110, 120, 130, and 140. The fourth brake module 140 may be positioned in a diagonal direction to the first brake module 110 with respect to the center of the vehicle 1.

The second processor 152 may process output signals of the pedal sensor 30, the wheel speed sensor 40, the motion sensor 50, and/or the steering sensor 70, determine braking power corresponding to the service brake, the EBD, the ABS, the TCS, the ESC, the EPB, and the like on the basis of the processed output signals, and output brake signals corresponding to the braking power to all or some of the brake modules 110, 120, 130, and 140. The brake modules 110, 120, 130, and 140 which have received the brake signals may brake the wheels 11, 12, 13, and 14 according to the corresponding braking power.

The second processor 152 may communicate with the first processor 151. For example, the second processor 152 may periodically transmit an electrical signal to the first processor 151. The first processor 151 may check an operation state (for example, a normal state or a failure state) of the second processor 152 on the basis of whether the first processor 151 receives a periodic state signal from the second processor 152. In addition, the second processor 152 may periodically receive an electrical signal from the first processor 151. The second processor 152 may determine a state of the first processor 151 as a normal state on the basis of the received periodic state signal from the first processor 151 and detect a failure state of the first processor 151 when the second processor 152 does not receive the periodic state signal from the first processor 151.

The second processor 152 may be integrally provided with or installed in any one of the brake modules 110, 120, 130, and 140. For example, the second processor 152 may be provided in a housing forming any one brake module or physically and mechanically attached to the housing forming any one brake module. The second processor 152 may be physically or mechanically integrated with one of the brake modules 110, 120, 130, and 140 as a single piece structure.

The second processor 152 may be integrally provided or assembled with one of the brake modules with which the first processor 151 is not integrated or installed. For example, when the first processor 151 is integrally provided or assembled with the first brake module 110 configured to brake the front left first wheel 11, the second processor 152 may be integrally provided or assembled with the second brake module 120 configured to brake the front second wheel 12 or integrally provided with the third brake module 130 configured to brake the left third wheel 13. As another example, when the first processor 151 is integrally provided or assembled with the first brake module 110 configured to brake the rear right first wheel 11, the second processor 152 may be integrally provided or assembled with the second brake module 120 configured to brake the right second wheel 12 or integrally provided or assembled with the third brake module 130 configured to brake the rear third wheel 13.

As described above, the second processor 152 may be installed in one of the brake modules, which is not installed in a diagonal direction to a brake module in which the first processor 151 is installed, with respect to the center of the vehicle 1.

The second processor 152 may control all or some of the brake modules 110, 120, 130, and 140. For example, the second processor 152 integrally provided with the second brake module 120 may control all the brake modules 110, 120, 130, and 140 during the failure of the first processor 151. As another example, the second processor 152 integrally provided with the second brake module 120 may control the second brake module 120 and the third brake module 130 and control all the brake modules 110, 120, 130, and 140 when the first processor 151 fails. The third brake module 130 may be positioned in a diagonal direction from the second brake module 120 with respect to the center of the vehicle 1.

The second processor 152 may be implemented using semiconductor elements provided separately from the first processor 151. Alternatively, the second processor 152 may be implemented using processing cores provided in a separate region from the first processor 151 in one semiconductor device.

The second processor 152 may have computational power equal to or less than that of the first processor 151. For example, the number of instructions that the second processor 152 can process per unit time may be equal to or fewer than the number of instructions that the first processor 151 can process per unit time.

As described above, the controller 150 may include the first processor 151 and the second processor 152. Accordingly, the second processor 152 may control the brake modules 110, 120, 130, and 140 when the first processor 151 fails, and the first processor 151 may control the brake modules 110, 120, 130, and 140 when the second processor 152 fails.

The first power source 81 may include a power network or connection though which power may be supplied to the pedal sensor 30, the wheel speed sensor 40, the motion sensor 50, the steering sensor 70, and the brake apparatus 100.

The second power source 82 may include a power network or connection which is provided separately from the first power source 81 and through which power may be supplied to the pedal sensor 30, the wheel speed sensor 40, and the brake apparatus 100.

For example, the first power source 81 may supply power to the first processor 151, the first brake module 110, and the fourth brake module 140. The second power source 82 may supply power to the second processor 152, the second brake module 120, and the third brake module 130.

The first power source 81 and the second power source 82 may include separate power circuits, respectively, of which power is supplied from different batteries, or include separate power circuits connected to be branched off from one battery. For example, the first power source 81 includes a first power circuit of which power is supplied from a first battery, and the second power source 82 may include a second power circuit of which power is supplied from a second battery. Alternatively, each of the first power source 81 and the second power source 82 may include a first power circuit and a second power circuit of which power is supplied from one battery.

Accordingly, the second power source 82 can supply power normally even when the first power source 81 is damaged, and the first power source 81 can supply power normally even when the second power source 82 is damaged.

As described above, as the brake apparatus 100 according to one embodiment includes the first processor 151 and the second processor 152, the second processor 152 may brake the vehicle 1 when the first processor 151 or the first power source 81 fails, and, in addition, the first processor 151 may brake the vehicle 1 when the second processor 152 or the second power source 82 fails.

Hereinafter, electrical connection relationships between the first processor 151, the second processor 152, and the brake modules 110, 120, 130, and 140 of the brake apparatus 100 will be described in detail.

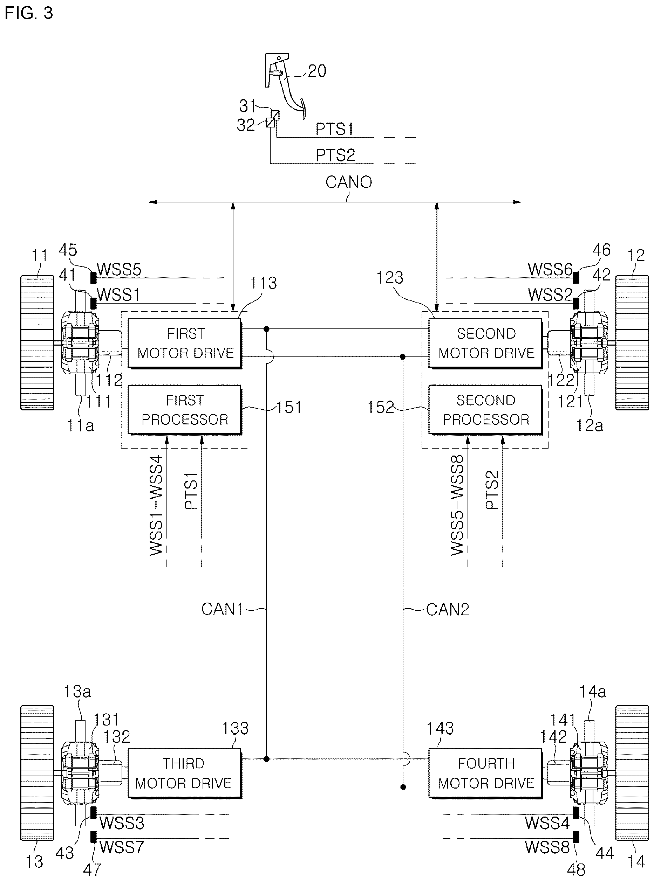

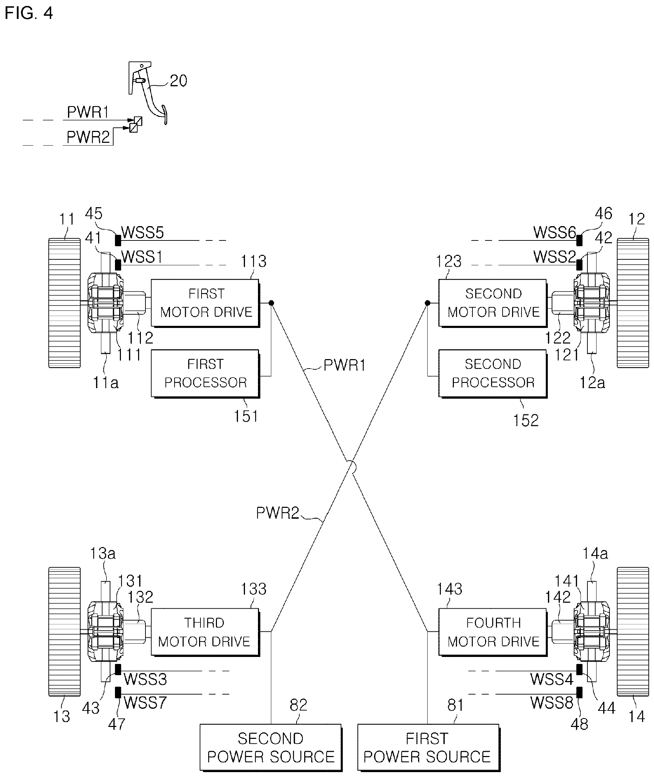

FIG. 3 is a schematic diagram for illustrating connection relationships between components included in a brake apparatus according to an embodiment of the present disclosure, and FIG. 4 is a schematic diagram for illustrating power supply between components included in a brake apparatus according to an embodiment of the present disclosure.

As illustrated in FIG. 3, a vehicle 1 may include pedal sensors 31 and 32, wheel speed sensors 41, 42, 43, 44, 45, 46, 47, and 48, and the brake apparatus 100. In addition, the brake apparatus 100 may include the first processor 151, the second processor 152, and the brake modules 110, 120, 130, and 140.

Pedal sensors comprised in the vehicle 1 may include a first pedal sensor 31 and a second pedal sensor 32. The first pedal sensor 31 and the second pedal sensor 32 may detect movement of the brake pedal 20, and provide electrical output signals PTS1 and PTS2 corresponding to the movement of the brake pedal 20 (for example, a movement displacement and/or movement speed) to the first processor 151 and the second processor 152, respectively. For example, the first pedal sensor 31 may be electrically connected to the first processor 151 and may provide the first pedal signal PTS1 to the first processor 151. The second pedal sensor 32 may be electrically connected to the second processor 152 and may provide the second pedal signal PTS2 to the second processor 152.

The first pedal sensor 31 and the second pedal sensor 32 may receive power from different power sources. For example, the first pedal sensor 31 may receive power from a first power source 81, and the second pedal sensor 32 may receive power from a second power source 82.

The wheel speed sensors comprised in the vehicle 1 may include a first wheel speed sensor 41, a second wheel speed sensor 42, a third wheel speed sensor 43, a fourth wheel speed sensor 44, a fifth wheel speed sensor 45, a sixth wheel speed sensor 46, a seventh wheel speed sensor 47, and an eighth wheel speed sensor 48. The wheel speed sensors 41, 42, 43, 44, 47, 46, 47, and 48 may provide electrical output signals WSS1, WSS2, WSS3, WSS4, WSS5, WSS6, WSS7, and WSS8 corresponding to rotational speeds of the wheels 11, 12, 13, and 14, respectively, to the first processor 151 and the second processor 152.

For example, the first wheel speed sensor 41 may provide the first wheel speed signal WSS1 corresponding to a rotational speed of the first wheel 11 to the first processor 151, and the second wheel speed sensor 42 may provide the second wheel speed signal WSS2 corresponding to a rotational speed of the second wheel 12 to the first processor 151. The third wheel speed sensor 43 may provide the third wheel speed signal WSS3 corresponding to a rotational speed of the third wheel 13 to the first processor 151, and the fourth wheel speed sensor 44 may provide the fourth wheel speed signal WSS4 corresponding to a rotational speed of the fourth wheel 14 to the first processor 151. In other words, the first processor 151 may receive the wheel speed signals WSS1 to WSS4 from the first, second, third, and fourth wheel speed sensors 41, 42, 43 and 44.

In addition, the fifth wheel speed sensor 45 may provide the fifth wheel speed signal WSS5 corresponding to the rotational speed of the first wheel 11 to the second processor 152, and the sixth wheel speed sensor 46 may provide the sixth wheel speed signal WSS6 corresponding to the rotational speed of the second wheel 12 to the second processor 152. The seventh wheel speed sensor 47 may provide the seventh wheel speed signal WSS7 corresponding to the rotational speed of the third wheel 13 to the second processor 152, and the eighth wheel speed sensor 48 may provide the eighth wheel speed signal WSS8 corresponding to the rotational speed of the fourth wheel 14 to the second processor 152. In other words, the second processor 152 may receive the wheel speed signals WSS5 to WSS8 from the fifth, sixth, seventh, and eighth wheel speed sensors 45, 46, 47, and 48.

The wheel speed sensors 41, 42, 43, 44, 45, 46, 47, and 48 may receive power from different power sources. For example, the first, second, third, and fourth wheel speed sensors 41, 42, 43, and 44 may receive the power from the first power source 81, and the fifth, sixth, seventh, and eighth wheel speed sensors 45, 46 and 48 may receive the power from the second power source 82.

The brake modules included in the vehicle 1 may include a first brake module 110 configured to brake the first wheel 11, a second brake module 120 configured to brake the second wheel 12, a third brake module 130 configured to brake the third wheel 13, and a fourth brake module 140 configured to brake the fourth wheel 14.

The brake modules 110, 120, 130, and 140 may include brakes 111, 121, 131, and 141, brake motors 112, 122, 132, and 142, and motor drives 113, 123, 133, and 143, respectively. For instance, the first brake module 110 may include a first brake 111, a first brake motor 112, and a first motor drive 113, and one or more of the first brake 111, the first brake motor 112, and the first motor drive 113 may be integrally provided. The second brake module 120 may include a second brake 121, a second brake motor 122, and a second motor drive 123, and one or more of the second brake 121, the second brake motor 122, and the second motor drive 123 may be integrally provided. The third brake module 130 may include a third brake 131, a third brake motor 132, and a third motor drive 133, and one or more of the third brake 131, the third brake motor 132, and the third motor drive 133 may be integrally provided. In addition, the fourth brake module 140 may include a fourth brake 141, a fourth brake motor 142, and a fourth motor drive 143, and one or more of the fourth brake 141, the fourth brake motor 142, and the fourth motor drive 143 may be integrally provided.

The brakes 111, 121, 131, and 141 may include paddle plates which brake the wheels 11, 12, 13, and 14 by com ing into contact with brake discs 11a, 12a, 13a, and 14a rotating with the wheels 11, 12, 13, and 14. The brakes included in the vehicle 1 may include the first brake 111 associated with the first wheel 11, the second brake 121 associated with the second wheel 12, the third brake 131 associated with the third wheel 13, and the fourth brake 141 associated with the fourth wheel 14.

The brake motors 112, 122, 132, and 142 may provide torques for moving the paddle plates so that the paddle plates come into contact with the brake discs 11a, 12a, 13a, and 14a. Rotation of each of the brake motors 112, 122, 132, and 142 is converted to linear movement through a spindle and nut mechanism, and the paddle plates may be moved to come into contact with the brake discs 11a, 12a, 13a, and 14a according to the linear movement of a piston. The brake motors included in the vehicle 1 may include the first brake motor 112 associated with the first brake 111, the second brake motor 122 associated with the second brake 121, the third brake motor 132 associated with the third brake 131, and the fourth brake motor 142 associated with the fourth brake 141.

The motor drives included in the vehicle 1 may include the first motor drive 113 associated with or operably coupled with the first brake motor 112, the second motor drive 123 associated with or operably coupled with the second brake motor 122, the third motor drive 133 associated with or operably coupled with the third brake motor 132, and the fourth motor drive 143 associated with or operably coupled with the fourth brake motor 142.

The motor drives 113, 123, 133, and 143 may control driving current for rotating the brake motors 112, 122, 132, and 142 on the basis of brake signals (or control signals) of the first processor 151 or the second processor 152. The motor drives 113, 123, 133, and 143 may comprise one or more switches (e.g., semiconductor components, for example, transistors such as a metal-oxide-semiconductor field-effect transistor (MOSFET)) to control the driving current for the brake motors 112, 122, 132, and 142. For example, each of the motor drives 113, 123, 133, and 143 may include an H-bridge inverter or a three-phase inverter according to a type of one of the brake motors 112, 122, 132, and 142, although not limited thereto. In addition, each of the motor drives 113, 123, 133, and 143 may include, for instance, a driving processor configured to receive a brake signal from the first processor 151 or the second processor 152 and control the H-bridge inverter or the three-phase inverter to control the driving current of the brake motors 112, 122, 132, and 142 on the basis of the brake signal or control signal.

As described above, the motor drives 113, 123, 133, and 143 may process the brake signal received from the first processor 151 or the second processor 152 and control the driving current of the brake motors 112, 122, 132, and 142 on the basis of the processed brake signal.

The first processor 151 may be integrally provided with the first brake module 110. For example, the first processor 151 may be provided on a single substrate or electric circuit or in a single semiconductor device with the first motor drive 113. As another example, the first processor 151 and the first motor drive 113 may be provided on different substrates, but may be disposed in a same housing forming the first brake module 110. As still another example, a substrate on which the first processor 151 is mounted may be electrically and mechanically attached to the first brake module 110.

The first processor 151 may receive the first pedal signal PTS1 from the first pedal sensor 31 and the first, second, third, and fourth wheel speed signals WSS1 to WSS4 from the first, second, third, and fourth wheel speed sensors 41, 42, 43, and 44. In addition, the first processor 151 may be connected to a vehicle communication network CAN0. For example, the first processor 151 may receive a yaw rate signal indicating a yaw rate of the vehicle 1 from a motion sensor 50 and a steering angle signal indicating a steering angle of the vehicle 1 from a steering sensor 70 through the vehicle communication network CAN0.

The first processor 151 may be connected to the first, second, third, and fourth motor drives 113, 123, 133, and 143 through a first communication network CAN1 and may communicate with the motor drives 113, 123, 133, and 143. In addition, the first processor 151 may be directly connected to the first motor drive 113 without being connected to the first motor drive 113 through the first communication network CAN1 and may be connected to the second, third, and fourth motor drives 123, 133, and 143 through the first communication network CAN1.

For example, the first communication network CAN1 may be a dedicated communication network which is separate from and independent of the vehicle communication network CAN0. Since the first communication network CAN1 is separated from and independent of the vehicle communication network CAN0, a brake signal generated by the first processor 151 can be transmitted to the motor drives 113, 123, 133, and 143 more quickly, and the brake modules 110, 120, 130, and 140 can more quickly perform the brake operations of the wheels 11, 12, 13, and 14. The first communication network CAN1 may use various communication methods, for example, but not limited to, Ethernet, media oriented systems transport (MOST), Flexray, controller area network (CAN), and local interconnect network (LIN).

The first processor 151 may provide a brake signal indicating braking power (e.g. a braking acceleration or fastening force) to each of the first and fourth motor drives 111 and 141. For example, the first processor 151 may recognize braking power required by a driver on the basis of the first pedal signal PTS1 and distribute the driving power required by the driver to the first brake module 110 and the fourth brake module 140. The first processor 151 may recognize slip and/or spin of the first wheel 11 and the fourth wheel 14 on the basis of the first, second, third, and fourth wheel speed signals WSS1 to WSS4 and control the first brake module 110 and the fourth brake module 140 on the basis of the slip and/or spin of the first wheel 11 and the fourth wheel 14. The first processor 151 may transmit a parking signal for fastening/applying or releasing a parking brake to each of the first and fourth motor drive 111 and 141 on the basis of a parking command of the driver. As described above, the first processor 151 may provide a control signal for an EBD, an ABS, a TCS, an ESC, and an EPB to each of the first and fourth motor drives 111 and 141.

The first and fourth motor drives 113 and 143 may drive the first and fourth brake motors 112 and 142, respectively, in response to a brake signal (or a control signal) of the first processor 151 and transmit a braking state signal indicating a braking state of each of the first and fourth brakes 111 and 141 caused by the first and fourth brake motors 112 and 142 to the first processor 151.

The first and fourth motor drives 113 and 143 may drive the first and fourth brake motors 112 and 142, respectively, in response to a parking signal of the first processor 151 and transmit a parking state signal indicating a parking state (a parking brake state) of each of the first and fourth brakes 111 and 141 caused by the first and fourth brake motors 112 and 142 to the first processor 151.

The second processor 152 may be integrally provided with the second brake module 120. For example, the second processor 152 may be provided on a single substrate or electric circuit or in a single semiconductor device with the second motor drive 123. As another example, the second processor 152 and the second motor drive 123 may be provided on different substrates, but may be disposed in a same housing forming the second brake module 120. As still another example, a substrate on which the second processor 152 is mounted may be electrically and mechanically attached to the second brake module 120.

The second processor 152 may receive the second pedal signal PTS2 from the second pedal sensor 32 and the wheel speed signals WSS5 to WSS8 from the fifth, sixth, seventh, and eighth wheel speed sensors 45, 46, 47, and 48. In addition, the second processor 152 may be connected to the vehicle communication network CAN0 independently of the first processor 151. For example, the second processor 152 may receive the yaw rate signal indicating the yaw rate of the vehicle 1 from the motion sensor 50 and the steering angle signal indicating the steering angle of the vehicle 1 from the steering sensor 70 through the vehicle communication network CAN0.

The second processor 152 may be connected to the first, second, third, and fourth motor drives 113, 123, 133, and 143 through a second communication network CAN2 and may communicate with the motor drives 113, 123, 133, and 143 through the second communication network CAN2. For example, the second communication network CAN2 may be a dedicated communication network separated from and independent of the vehicle communication network CAN0 and the first communication network CAN1. The second communication network CAN2 may use various communication methods, for example, but not limited to, Ethernet, MOST, Flexray, CAN, and LIN. In addition, the second processor 152 may be directly connected to the second motor drive 123 without being connected thereto through the second communication network CAN2 and also be connected to the second, third, and fourth motor drives 123, 133, and 143 through the second communication network CAN2.

For example, the second communication network CAN2 may be a dedicated communication network which is separate from and independent of the vehicle communication network CAN0 and the first communication network CAN1. Since the second communication network CAN2 is separated from and independent of the vehicle communication network CAN0 and the first communication network CAN1, a brake signal generated by the second processor 152 may be more quickly transmitted to the motor drives 113, 123, 133, and 143, and the brake modules 110, 120, 130, and 140 may more quickly perform the brake operations of the wheels 11, 12, 13, and 14. The second communication network CAN2 may use various communication methods such as Ethernet, MOST, Flexray, CAN, and LIN.

The second processor 152 may provide a brake signal indicating braking power (e.g. a braking acceleration or fastening force) to each of the second and third motor drives 121 and 131. For example, the second processor 152 may recognize driving power required by the driver on the basis of the second pedal signal PTS2 and may distribute the braking power required by the driver to the second brake module 120 and the third brake modules 130. The second processor 152 may recognize slip and/or spin of the second wheel 12 and the third wheel 13 on the basis of the fifth, sixth, seventh, and eighth wheel speed signals WSS5 to WSS8 and control the second brake module 120 and the third brake modules 130 on the basis of the slip and/or the spin of the second wheel 12 and the third wheel 13. The second processor 152 may transmit a parking signal for fastening/applying or releasing the parking brake to each of the second and third motor drives 121 and 131 on the basis of a parking command of the driver. As described above, the second processor 152 may provide control signals for the EBD, the ABS, the TCS, the ESC, and the EPB to each of the second and third motor drives 121 and 131.

The second and third motor drives 123 and 133 may drive the second and third brake motors 122 and 132, respectively, in response to a brake signal (or control signal) of the second processor 152 and transmit a braking state signal indicating a braking state of each of the second and third brakes 121 and 131 caused by the second and third brake motors 122 and 132, respectively, to the second processor 152.

The second and third motor drives 123 and 133 may drive the second and third brake motors 122 and 132, respectively, in response to a parking signal (or parking brake signal) of the second processor 152 and transmit a parking state signal indicating a parking state of each of the second and third brakes 121 and 131 caused by the second and third brake motors 122 and 132, respectively, to the second processor 152.

The first processor 151 may transmit a periodic state signal for indicating an operation state (for example, a normal state or failure state) of the first processor 151 to the second processor 152 and the first motor drive 111. The second processor 152 may transmit a periodic state signal for indicating an operation state (for example, a normal state or failure state) of the second processor 152 to the first processor 151 and the second motor drive 121. In addition, each of the motor drives 113, 123, 133, and 143 may transmit a periodic state signal indicating an operation state (for example, a normal state or failure state) thereof to the first processor 151 and/or the second processor 152.

As described above, the first processor 151 and the second processor 152 may mutually transmit and receive the periodic state signals indicating the operation states. The first processor 151 may recognize or determine the operation state of the second processor 152 on the basis of the periodic state signal of the second processor 152, and the second processor 152 may recognize or determine the operation state of the first processor 151 on the basis of the periodic state signal of the first processor 151.

Each of the first processor 151 and the second processor 152 may control the first, second, third, and fourth brake modules 110, 120, 130, and 140 on the basis of the failure state of the second processor 152 or the failure state of the first processor 151.

For example, the first processor 151 may output a brake signal and/or parking signal to the first brake module 110 and the fourth brake module 140 when the state of the second processor 152 indicates that the second processor 152 is in a normal state. The first processor 151 may output a brake signal and/or parking signal to the first, second, third, and fourth brake modules 110, 120, 130, and 140 when the state of the second processor 152 indicates that the second processor is in a failure state. The second processor 152 may output a brake signal and/or parking signal to the second and third brake modules 120 and 130 when the state of the first processor 151 indicates that the first processor 151 is in a normal state. In addition, the second processor 152 may output a brake signal and/or parking signal to the first, second, third, and fourth brake modules 110, 120, 130, and 140 when the state of the first processor 151 indicates that the first processor 151 is in a failure state.

As another example, the first processor 151 may output a brake signal and/or parking signal to the first, second, third, and fourth brake modules 110, 120, 130, and 140 when the first processor 151 is in a normal state. The second processor 152 may not output a brake signal and/or parking signal when the state of the first processor 151 is in a normal state. In addition, the second processor 152 may output a brake signal and/or parking signal to the first, second, third, and fourth brake modules 110, 120, 130, and 140 only when the state of the first processor 151 is in a failure state.

As described above, the first processor 151 and second processor 152 are disposed or provided to be spaced apart from each other in order for at least one of the first processor 151 and the second processor 152 not to be damaged when the vehicle 1 is externally impacted. Accordingly, even when the vehicle 1 is externally impacted, the brake apparatus 100 may operate normally in response to braking power required by the driver.

The first motor drive 113 may check an operation state of the first processor 151 on the basis of the periodic state signal of the first processor 151, and the second motor drive 123 may check an operation state of the second processor 152 on the basis of the periodic state signal of the second processor 152.

Each of the first motor drive 113 and the second motor drive 123 may control the first, second, third, and fourth brake modules 110, 120, 130, and 140 in response to the operation state of the second processor 152 indicating that the second processor 152 is in a failure state or the operation state of the first processor 151 indicating that the first processor 151 is in a failure state.

For example, the first motor drive 113 may receive the first pedal signal PTS1 and/or the first, second, third, and fourth wheel speed signals WSS1 to WSS4 in response to the operation state of the first processor 151 indicating that the first processor 151 is in a failure state. In addition, the first motor drive 113 may control the first brake motor 112 and transmit a brake signal to the fourth motor drive 143 to control braking power on the basis of the first pedal signal PTS1 and/or the first to fourth wheel speed signals WSS1 to WSS4. In addition, the first motor drive 113 may control the first brake motor 112 and transmit a parking signal to the fourth motor drive 143 to apply or release the parking brake in response to a parking command of the driver when the operation state of the first processor 151 is a failure state.

The second motor drive 123 may receive the second pedal signal PTS2 and/or the fifth to eighth wheel speed signals WSS5 to WSS8 on the basis of the state of the second processor 152 indicating that the second processor 152 is in a failure state. In addition, the second motor drive 123 may control the second brake motor 122 and transmit a brake signal to the third motor drive 133 to control braking power on the basis of the second pedal signal PTS2 and/or the fifth-, sixth-, seventh-, and eighth-wheel speed signals WSS5 to WSS8. In addition, the second motor drive 123 may control the second brake motor 122 and transmit a parking signal (or a parking control signal) to the third motor drive 133 to fasten/apply or release the parking brake in response to a parking command of the driver when the state of the second processor 152 is in a failure state.

As described above, the first motor drive 113 and the second motor drive 123 may share a received signal with the first and second processors 151 and 152. The first motor drive 113 and the second motor drive 123 may control the first brake motor 112 and the second brake motor 122 to provide or perform the service brake and the ABS function on the basis of the states of the first processor 151 and the second processor 152 indicating that the first processor 151 and the second processor 152 are in failure states. In addition, the first motor drive 113 and the second motor drive 123 may control the fourth brake module 140 and the third brake module 130 to provide or perform the service brake and the ABS function on the basis of the states of the first processor 151 and the second processor 152 indicating that the first processor 151 and the second processor 152 are in failure states.

As illustrated in FIG. 4, the first power source 81 may supply power to the first pedal sensor 31, the first, second, third, and fourth wheel speed sensors 41, 42, 43, and 44, the first processor 151, the first motor drive 113, and the fourth motor drive 143 through a first power network PWR1. As described above, the first processor 151 receiving the power from the first power source 81 may receive the first pedal signal PTS1 of the first pedal sensor 31 which receives the power from the first power source 81 and receive the first to fourth wheel speed signals WSS1 to WSS4 of the first, second, third, and fourth wheel speed sensors 41, 42, 43, and 44. In addition, the first motor drive 113 and the fourth motor drive 143 may convert the power received from the first power source 81 and provide or supply the converted power to the first brake motor 112 and the fourth brake motor 142, respectively.

The second power source 82 may supply power to the second pedal sensor 32, the fifth-, sixth-, seventh-, and eighth-wheel speed sensors 45, 46, 47, and 48, the second processor 152, the second motor drive 123, and the third motor drive 133 through a second power network PWR2. As described above, the second processor 152 which receives the power from the second power source 82 may receive the second pedal signal PTS2 of the second pedal sensor 32 which receives the power from the second power source 82 and receive the fifth to eighth wheel speed signals WSS5 to WSS8 of the fifth, sixth, seventh, and eighth wheel speed sensors 45, 46, 47, and 48. In addition, the second motor drive 123 and the third motor drive 133 may convert the power received from the second power source 82 and provide or supply the converted power to the second brake motor 122 and the third brake motor 132, respectively.

The first power source 81 and the second power source 82 may include separate power circuits of which power is supplied from different batteries or may include separate power circuits branched off from one battery. In addition, the second power network PWR2 may be a power network separate from and independent of the first power network PWR1.

Accordingly, the second power source 82 and the second power network PWR2 may supply power normally even when the first power source 81 or the first power network PWR1 is in a failure state (e.g. damaged or malfunctioning), and the first power source 81 and the first power network PWR1 may supply the power normally even when the second power source 82 or the second power network PWR2 is in a failure state (e.g. damaged or malfunctioning).

As described above, in the brake apparatus 100, even when the first processor 151 (or the second processor 152) is in a failure state (for example, but not limited to, damaged, malfunctioned, or reset, or cut off from power), the second processor 152 (or the first processor 151) may control the brake modules 110, 120, 130, and 140 according to braking power requested or required by the driver or a controller.

For example, the brake apparatus 100 may brake the vehicle 1 in response to braking power requested through the brake pedal 20 by the driver even when the vehicle communication network CAN0 is in a failure state (e.g. damaged). In addition, the brake apparatus 100 may provide additional functions such as the EBD, the ABS, the TCS, and the EPB.

The brake apparatus 100 may brake the vehicle 1 normally using a normal communication network, which is in a normal state, even when any one of the first and second communication networks CAN1 and CAN2 is in a failure state (such as damaged). In addition, the brake apparatus 100 may provide all additional functions such as the EBD, the ABS, the TCS, the ESC, and the EPB.

The brake apparatus 100 may receive power from a normal power source, which is in a normal state, and brake the vehicle 1 even when any one of the first and second power sources 81 and 82 is in a failure state (e.g. damaged). In addition, the brake apparatus 100 may provide additional functions such as the EBD, the ABS, the TCS, and the EPB.

The brake apparatus 100 may brake the vehicle 1 normally using a normal processor, which is in a normal state, even when any one of the first and second processors 151 and 152 is in a failure state (e.g. damaged). In addition, the brake apparatus 100 may provide all additional functions such as the EBD, the ABS, the TCS, the ESC, and the EPB.

The brake apparatus 100 may brake the vehicle 1 normally using a normal brake, which is in a normal state, even when any of the first, second, third, and fourth brake modules 110, 120, 130, and 140 is in a failure state (e.g. damaged). In addition, the brake apparatus 100 may provide all additional functions such as the EBD, the ABS, the TCS, the ESC, and the EPB.

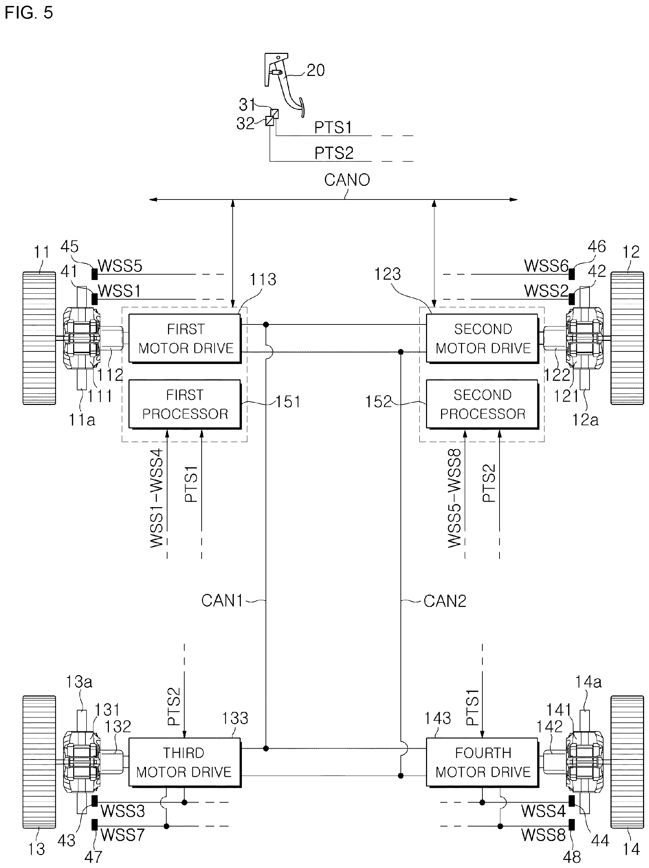

FIG. 5 is a conceptual diagram for illustrating communication connection relationships between components included in a brake apparatus according to an embodiment of the present disclosure.

As illustrated in FIG. 5, a vehicle 1 may include pedal sensors 31 and 32, wheel speed sensors 41, 42, 43, and 44, a first processor 151, a second processor 152, brakes 111, 121, 131, and 141, brake motors 112, 122, 132, and 142, and motor drives 113, 123, 133, and 143.

A first pedal sensor 31, first, second, third, and fourth wheel speed sensors 41, 42, 43, and 44, the first processor 151, a first motor drive 113, and a fourth motor drive 143 may receive power from a first power source (for example, the first power source 81 of FIG. 4), and a second pedal sensor 32, fifth, sixth, seventh, and eighth wheel speed sensors 45, 46, 47, and 48, the second processor 152, a second motor drive 123, and a third motor drive 133 may receive power from a second power source (for example, the second power source 82 of FIG. 4).

The pedal sensors 31 and 32, the wheel speed sensors 41 to 48, the brakes 111, 121, 131, and 141, the brake motors 112, 122, 132, and 142, the first processor 151, and the second processor 152 may be the same as or similar to those illustrated in FIG. 3.

Each of the motor drives 113, 123, 133, and 143 may periodically receive state signals from the first processor 151 and/or the second processor 152 and check failure states of the first processor 151 and/or the second processor 152 on the basis of the periodic state signals. The motor drives 113, 123, 133, and 143 may independently control the brake modules 110, 120, 130, and 140, respectively, on the basis of the checked failure states of the first processor 151 and the second processor 152.

Each of the motor drives 113, 123, 133, and 143 may be connected to the first pedal sensor 31 or the second pedal sensor 32 and may receive a pedal signal PTS1 or PTS2 from the first pedal sensor 31 or the second pedal sensor 32. For example, the first motor drive 113 may receive the first pedal signal PTS1 from the first pedal sensor 31, and the second motor drive 123 may receive the second pedal signal PTS2 from the second pedal sensor 32. The third motor drive 133 may receive the second pedal signal PTS2 from the second pedal sensor 32, and the fourth motor drive 143 may receive the first pedal signal PTS1 from the first pedal sensor 31.

As described above, the first motor drive 113 and the fourth motor drive 143 which receive power from a first power source 81 (see FIG. 4) may receive the first pedal signal PTS1 of the first pedal sensor 31 which receives the power from the first power source 81. In addition, the second motor drive 123 and the third motor drive 133 which receive the power from a second power source 82 (see FIG. 4) may receive the second pedal signal PTS1 of the second pedal sensor 32 which receives the power from the second power source 82.

The motor drives 113, 123, 133, and 143 may recognize or determine braking power requested or required by a driver on the basis of the first pedal signal PTS1 or the second pedal signal PTS2 and drive the brake motors 112, 122, 132, and 142, respectively, on the basis of the recognized required braking power. For example, the first motor drive 113 may control the first brake motor 112 on the basis of the first pedal signal PTS1. The second motor drive 123 may control the second brake motor 122 on the basis of the second pedal signal PTS2. The third motor drive 133 may control the third brake motor 132 on the basis of the second pedal signal PTS2. In addition, the fourth motor drive 143 may control the fourth brake motor 142 on the basis of the first pedal signal PTS1.

The motor drives 113, 123, 133, and 143 may receive wheel speed signals WSS1 to WSS4 and/or WSS5 to WSS8 from the wheel speed sensors 41 to 44 and/or 45 to 48, respectively. The first motor drive 113 may receive a first wheel speed signal WSS1 of the first wheel speed sensor 41 and/or a fifth wheel speed signal WSS5 of the fifth wheel speed sensor 45. The second motor drive 123 may receive a second wheel speed signal WSS1 of the second wheel speed sensor 42 and/or a sixth wheel speed signal WSS6 of the sixth wheel speed sensor 46. The third motor drive 133 may receive a third wheel speed signal WSS3 of the third wheel speed sensor 43 and/or a seventh wheel speed signal WSS7 of the seventh wheel speed sensor 47. The fourth motor drive 143 may receive a fourth wheel speed signal WSS4 of the fourth wheel speed sensor 44 and/or an eighth wheel speed signal WSS8 of the eighth wheel speed sensor 48.

As described above, the motor drives 113, 123, 133, and 143 may receive the wheel speed signals from the wheel speed sensors which measure rotational speeds of wheels associated with the motor drives 113, 123, 133, and 143.

The motor drives 113, 123, 133, and 143 may detect or recognize slip of the wheels on the basis of the wheel speed signals WSS1 to WSS4 and/or WSS5 to WSS8 during wheel braking. The motor drives 113, 123, 133, and 143 may control the brake motors 112, 122, 132, and 142, respectively, to allow rotation of the wheels 11 to 14 on the basis of the recognized slip of the wheels 11 to 14. For example, the first motor drive 113 may control the first brake motor 112 to temporarily allow rotation of a first wheel 11 on the basis of the first wheel speed signal WSS1 and/or the fifth wheel speed signal WSS5. The second motor drive 123 may control the second brake motor 122 to temporarily allow rotation of a second wheel 12 on the basis of the second wheel speed signal WSS2 and/or the sixth wheel speed signal WSS6. The third motor drive 133 may control the third brake motor 132 to temporarily allow rotation of a third wheel 13 on the basis of the third wheel speed signal WSS3 and/or the seventh wheel speed signal WSS7. In addition, the fourth motor drive 143 may control the fourth brake motor 142 to temporarily allow rotation of a fourth wheel 14 on the basis of the fourth wheel speed signal WSS4 and/or the eighth wheel speed signal WSS8.

The motor drives 113, 123, 133, and 143 may control the brake motors 112, 122, 132, and 142, respectively, to brake the vehicle 1 on the basis of the first pedal signal PTS1 or the second pedal signal PTS2 during the failure states of the first processor 151 and the second processor 152. In addition, the motor drives 113, 123, 133, and 143 may control the brake motors 112, 122, 132, and 142, respectively, to provide an ABS function on the basis of the wheel speed signals WSS1 to WSS4 and/or WSS5 to WSS8 during the failure states of the first processor 151 and the second processor 152.

With the first processor 151, the first motor drive 113 may receive the first to fourth wheel speed signals WSS1 to WSS4 of the first, second, third, and fourth wheel speed sensors 41, 42, 43, and 44. In addition, with the second processor 152, the second motor drive 123 may receive the fifth to eighth wheel speed signals WSS5 to WSS8 of the fifth, sixth, seventh, and eighth wheel speed sensors 45, 46, 47, and 48.

When the vehicle 1 is driven by the first wheel 11 and the second wheel 12 (for example, current driving), the first motor drive 113 and the second motor drive 123 may detect or recognize the spin of the first wheel 11 and the second wheel 12, respectively. For example, the first motor drive 113 may recognize the spin of the first wheel 11 on the basis of the first to fourth wheel speed signals WSS1 to WSS4. In addition, the second motor drive 123 may detect or recognize the spin of the second wheel 12 on the basis of the fifth to eighth wheel speed signals WSS5 to WSS8.

The first and second motor drives 111 and 121 may control the first and second brake motors 112 and 122, respectively, to brake the wheels 11 and 12 on the basis of the recognized spin of the wheels 11 and 12. For example, the first motor drive 113 may control the first brake motor 112 to brake the first wheel 11 on the basis of the detection of the spin of the first wheel 11. The second motor drive 123 may control the second brake motor 122 to brake the second wheel 12 on the basis of the detection of the spin of the second wheel 12.

As described above, the motor drives 113, 123, 133, and 143 may brake the wheels 11, 12, 13, and 14, respectively, on the basis of braking power requested by the driver during the states that the first and second processors 151 and 152 are in a failure state. The motor drives 113, 123, 133, and 143 may temporarily allow rotation of the wheels 11, 12, 13, and 14, respectively, on the basis of the detection of the slip of the wheels 11, 12, 13, and 14. In addition, the motor drives 113, 123, 133, and 143 may temporarily brake the wheels 11, 12, 13, and 14 on the basis of the detection of the spin of the wheels 11, 12, 13, and 14. In other words, each of the motor drives 113, 123, 133, and 143 may perform or provide a service brake, the ABS, and a TCS during the state the first and second processors 151 and 152 are in a failure state.

As described above, in the brake apparatus 100 according to an embodiment of the present disclosure, even when the first and second processors 151 and 152 are in a failure state (e.g. damaged, malfunctioned, or reset, or cut off from the power), the motor drives 113, 123, 133, and 143 can control the brake modules 110, 120, 130, and 140, respectively, according to braking power requested or required by the driver. In addition, each of the motor drives 113, 123, 133, and 143 may provide an ABS function and/or a TCS function.

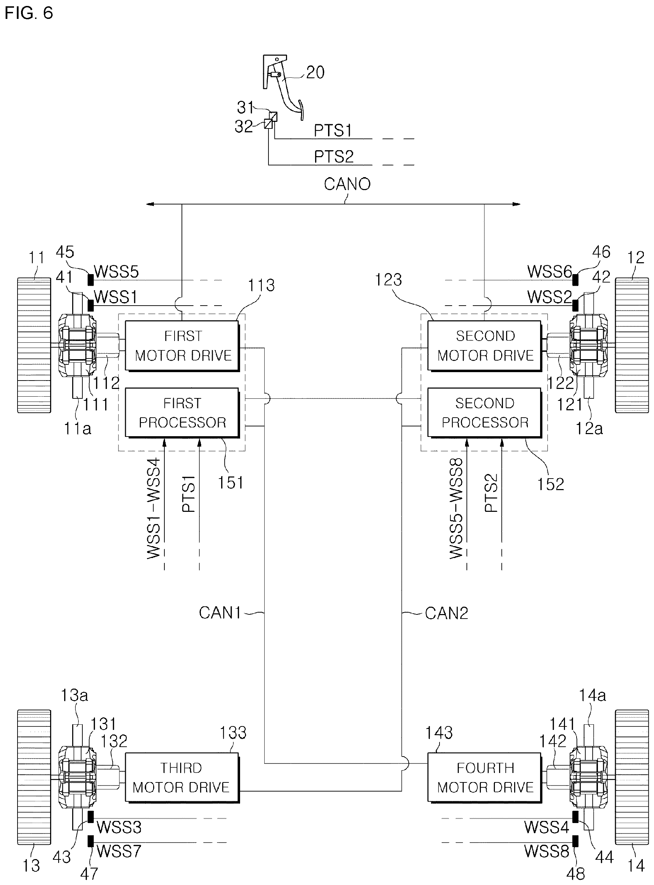

FIG. 6 is a conceptual diagram for illustrating communication connection relationships between components included in a brake apparatus according to another embodiment of the present disclosure.

As illustrated in FIG. 6, a vehicle 1 may include pedal sensors 31 and 32, wheel speed sensors 41, 42, 43, and 44, a first processor 151, a second processor 152, brakes 111, 121, 131, and 141, brake motors 112, 122, 132, and 142, and motor drives 113, 123, 133, and 143.

A first pedal sensor 31, first, second, third, and fourth wheel speed sensors 41, 42, 43, and 44, the first processor 151, a first motor drive 113, and a fourth motor drive 143 may receive power from a first power source (for example, the first power source 81 of FIG. 4), and a second pedal sensor 32, fifth, sixth, seventh, and eighth wheel speed sensors 45, 46, 47, and 48, the second processor 152, a second motor drive 123, and a third motor drive 133 may receive power from a second power source (for example, the second power source 82 of FIG. 4).

The pedal sensors 31 and 32, the wheel speed sensors 41 to 48, the brakes 111, 121, 131, and 141, the brake motors 112, 122, 132, and 142, the first processor 151, and the second processor 152 may be the same as or similar to those illustrated in FIG. 3.

The first processor 151 may be connected to the first motor drive 113 and the fourth motor drive 143 through a first communication network CAN1. The first processor 151 may be directly connected to the second processor 152 through a hard wire and connected to the second motor drive 123 and the third motor driver 133 through the second processor 152.

The second processor 152 may be connected to the second motor drive 123 and the third motor drive 133 through a second communication network CAN2. The second processor 152 may be directly connected to the first processor 151 through the hard wire and connected to the first motor drive 113 and the fourth motor driver 143 through the first processor 151.

For example, the first processor 151 may transmit control signals for the service brake, the EBD, the ABS, the TCS, the ESC, and the EPB to each of the first motor drive 113 and the fourth motor drive 143. In addition, the first processor 151 may transmit control signals for the EBD, the ABS, the TCS, the ESC, and the EPB to each of the second motor drive 123 and the third motor drive 133 when the second processor 152 is in a failure state. In addition, the second processor 152 may transmit control signals for the service brake, the EBD, the ABS, the TCS, the ESC, and the EPB to each of the second motor drive 123 and the third motor drive 133. In addition, the second processor 152 may transmit control signals for the EBD, the ABS, the TCS, the ESC, and the EPB to each of the first motor drive 113 and the fourth motor drive 143 when the first processor 151 is in a failure state.

As another example, the first processor 151 may transmit control signals for the service brake, the EBD, the ABS, the TCS, the ESC, and the EPB to each of the motor drives 113, 123, 133, and 143. In addition, the second processor 152 may transmit control signals for the service brake, the EBD, the ABS, the TCS, the ESC, and the EPB to each of the motor drives 113, 123, 133, and 143 during a state that the first processor 151 is in a failure state.

As described above, the first processor 151 and the second processor 152 may have various connections to the motor drives 113, 123, 133, and 143.

According to one aspect of the present disclosure, an electro-mechanical brake apparatus and a method of controlling the same may be resistant to damage or an error in an electrical system of a vehicle.

According to one aspect of the present disclosure, an electro-mechanical brake apparatus and a method of controlling the same may provide redundancy to electrical devices, such as a power circuit, a sensor, and a processor.

According to one aspect of the present disclosure, an electro-mechanical brake apparatus and a method of controlling the same may provide an auxiliary processor which is provided on a wheel in preparation for a failure (such as damage, an error, malfunction, or abnormality) of a main processor and can independently control a motor provided on the wheel.

Exemplary embodiments of the present disclosure have been described above. In the exemplary embodiments described above, some components may be implemented as a "module". Here, the term 'module' means, but is not limited to, a software and/or hardware component, such as a Field Programmable Gate Array (FPGA) or Application Specific Integrated Circuit (ASIC), which performs certain tasks. A module may advantageously be configured to reside on the addressable storage medium and configured to execute on one or more processors.

Thus, a module may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The operations provided for in the components and modules may be combined into fewer components and modules or further separated into additional components and modules. In addition, the components and modules may be implemented such that they execute one or more CPUs in a device.

With that being said, and in addition to the above described exemplary embodiments, embodiments can thus be implemented through computer readable code/instructions in/on a medium, e.g., a computer readable medium, to control at least one processing element to implement any above described exemplary embodiment. The medium can correspond to any medium/media permitting the storing and/or transmission of the computer readable code.

The computer-readable code can be recorded on a medium or transmitted through the Internet. The medium may include Read Only Memory (ROM), Random Access Memory (RAM), Compact Disk-Read Only Memories (CD-ROMs), magnetic tapes, floppy disks, and optical recording medium. Also, the medium may be a non-transitory computer-readable medium. The media may also be a distributed network, so that the computer readable code is stored or transferred and executed in a distributed fashion. Still further, as only an example, the processing element could include at least one processor or at least one computer processor, and processing elements may be distributed and/or included in a single device.

While exemplary embodiments have been described with respect to a limited number of embodiments, those skilled in the art, having the benefit of this disclosure, will appreciate that other embodiments can be devised which do not depart from the scope as disclosed herein. Accordingly, the scope should be limited only by the attached claims.

## Claims

1. A brake apparatus comprising:
a first motor operably coupled to a first brake configured to brake a first wheel of a vehicle;
a first drive configured to control a current driving the first motor to brake the first wheel;
a second motor operably coupled to a second brake configured to brake a second wheel of the vehicle;
a second drive configured to control a current driving the second motor to brake the second wheel;
a first processor integrated with the first drive configured to control the current driving the first motor, the first processor configured to receive an output of a first pedal sensor configured to detect movement of a brake pedal of the vehicle; and
a second processor integrated with the second drive configured to the current driving the second motor, the second processor configured to receive an output of a second pedal sensor configured to detect the movement of the brake pedal,
wherein:
the first processor is configured to transmit a first control signal to the first drive, which is configured to control the current driving the first motor, in response to the output of the first pedal sensor, and
the second processor is configured to transmit a second control signal to the second drive, which is configured to control the current driving the second motor, in response to the output of the second pedal sensor.

2. The brake apparatus of claim 1, wherein:
the first processor is configured to transmit a first signal associated with an operation state of the first processor to the second processor, the first drive, and the second drive; and
the second processor is configured to transmit a second signal associated with an operation state of the second processor to the first processor, the first drive, and the second drive.

3. The brake apparatus of claim 1, wherein:
the first processor is configured to transmit a third control signal to the second drive, which is configured to control the current driving the second motor, through a first network connecting the second drive and the first processor in response to a state that the second processor is in a failure state; and
the second processor is configured to transmit a fourth control signal to the first drive, which is configured to control the current driving the first motor, through a second network connecting the first drive and the second processor in response to a state that the first processor is in the failure state.

4. The brake apparatus of claim 1, wherein:
the first drive is configured to receive the output of the first pedal sensor and control the current driving the first motor to brake the first wheel based on the output of the first pedal sensor in respond to a state that the first and second processors are in a failure state; and
the second drive is configured to receive the output of the second pedal sensor and control the current driving the second motor to brake the second wheel based on the output of the second pedal sensor in respond to the state that the first and second processors are in the failure state.

5. The brake apparatus of claim 1, wherein:
the first processor is communicationally connected with a first wheel speed sensor configured to measure a rotational speed of the first wheel and a second wheel speed sensor configured to measure a rotational speed of the second wheel; and
the second processor is communicationally connected with a third wheel speed sensor configured to measure the rotational speed of the first wheel and a fourth wheel speed sensor configured to measure the rotational speed of the second wheel.

6. The brake apparatus of claim 5, wherein:
the first processor is configured to transmit a fifth control signal to the first and second drives, which is configured to control the currents driving the first and second motors respectively, to intermittently brake the first and second wheels based on the output of the first wheel speed sensor configured to measure the rotational speed of the first wheel and an output of the second wheel speed sensor configured to measure the rotational speed of the second wheel when the second processor is in a failure state,
the second processor is configured to transmit an sixth control signal to the first and second drives, which is configured to control the currents driving the first and second motors respectively, to intermittently brake the first and second wheels based on the output of the third wheel speed sensor configured to measure the rotational speed of the first wheel and an output of the fourth wheel speed sensor configured to measure the rotational speed of the second wheel when the first processor is in the failure state.

7. The brake apparatus of claim 5, wherein:
the first drive is configured to control the current driving the first motor to intermittently brake the first wheel based on an output of the first wheel speed sensor which is configured to measure the rotational speed of the first wheel in response to a state that the first and second processors are in a failure state; and
the second drive is configured to control the current driving the second motor to intermittently brake the second wheel based on an output of the fourth wheel speed sensor which is configured to measure the rotational speed of the second wheel in response to the state that the first and second processors are in the failure state.

8. The brake apparatus of claim 1, wherein:
the first processor and the first drive which are configured to control the current driving the first motor are connected with a first power source of the vehicle; and
the second processor and the second drive which are configured to control the current driving the second motor are connected with a second power source of the vehicle.

9. Method of controlling a brake apparatus including a first motor operably coupled to a first brake configured to brake a first wheel of a vehicle and a second motor operably coupled to a second brake configured to brake a second wheel of the vehicle, the method comprising:
receiving, by a first processor, an output of a first pedal sensor configured to detect movement of a brake pedal of the vehicle;
receiving, by a second processor, an output of a second pedal sensor configured to detect the movement of the brake pedal;
transmitting, by the first processor, a first control signal to a first drive, integrated with the first processor, based on the output of the first pedal sensor of the vehicle;
transmitting, by the second processor, a second control signal to a second drive, integrated with the second processor, based on the output of the second pedal sensor of the vehicle;
controlling, by the first drive integrated with the first processor, a current driving the first motor to brake the first wheel; and
controlling, by the second drive integrated with the second processor, a current driving the second motor to brake the second wheel.

10. Method of claim 9, further comprising:
transmitting, by the first processor, a first signal associated with an operation state of the first processor to the second processor, the first drive, and the second drive; and
transmitting, by the second processor, a second signal associated with an operation state of the second processor to the first processor, the first drive, and the second drive.

11. Method of claim 9, further comprising:
transmitting, by the first processor, a third control signal to the second drive, which is configured to the current driving the second motor, through a first network connecting the second drive and the first processor in response to a state that the second processor is in a failure state; and
transmitting, by the second processor, a fourth control signal to the first drive, which is configured to control the current driving the first motor, through a second network connecting the first drive and the second processor in response to a state that the first processor is in the failure state.

12. Method of claim 9, further comprising:
receiving, by the first drive integrated with the first processor, the output of the first pedal sensor;
controlling, by the first drive, the current driving the first motor to brake the first wheel based on the output of the first pedal sensor in response to a state that the first and second processors are in a failure state;
receiving, by the second drive integrated with the second processor, the output of the second pedal sensor;
controlling, by the second drive, the current driving the second motor to brake the second wheel based on the output of the second pedal sensor in response to the state that the first and second processors are in the failure state.

13. Method of claim 9 further comprising:
receiving, by the first processor, an output of the first wheel speed sensor configured to measure a rotational speed of the first wheel and an output of the second wheel speed sensor configured to measure a rotational speed of the second wheel; and
receiving, by the second processor, an output of the third wheel speed sensor configured to measure the rotational speed of the first wheel and an output of the fourth wheel speed sensor configured to measure the rotational speed of the second wheel.

14. Method of claim 13, further comprising:
transmitting, by the first processor, a fifth control signal to the first and second drives, which is configured to control the current driving the first and second motors respectively, to intermittently brake the first and second wheels based on the outputs of the first and second wheel speed sensors, configured to measure the rotational speeds of the first and second wheels respectively, in response to a state that the second processor is in a failure state; and
transmitting, by the second processor, an sixth control signal to the first and second drives, which is configured to control the current driving the first and second motors respectively, to intermittently brake the first and second wheels based on the outputs of the third and fourth wheel speed sensors, configured to measure the rotational speeds of the first and second wheels respectively, in response to a state that the first processor is in the failure state.

15. Method of claim 13, further comprising:
controlling, by the first drive, the current driving the first motor to intermittently brake the first wheel based on the output of the first wheel speed sensor in response to a state that the first and second processors are in a failure state; and
controlling, by the second drive, the current driving the second motor to intermittently brake the second wheel based on the output of the fourth wheel speed sensor configured to measure the rotational speed of the second wheel in a response to the state that the first and second processors are in the failure state.
